# EUROPEAN PATENT APPLICATION

(11) **EP 4 681 855 A1**
(43) Date of publication of application: **21.01.2026**
(21) Application number: 25187357.6
(22) Date of filing: 03.07.2025
(51) Int. Cl.: B23K 9/173, B23K 9/29, B23K 9/32

(54) **SPRING-LOADED DOCKING SYSTEMS FOR WELDING TORCH NECKS**

(30) Priority: 15.07.2024 US 202463671393 P; 10.06.2025 US 202519233138
(71) Applicant: Illinois Tool Works Inc., Glenview IL 60025 (US)
(72) Inventor: LIZOTTE, Ryan, Glenview, 60025 (US); WHIPPLE, Bradley Eugene, Glenview, 60025 (US)
(74) Representative: HGF

(57) **Abstract**

An example docking system for a welding torch neck including a neck body configured to receive the welding torch neck, one or more bolts, and a face; a torch connector including one or more first grooves or projections and configured to receive the one or more bolts of the neck body and to connect to a welding torch; and a cover comprising one or more second grooves or projections and configured to secure the neck body to the torch connector by joining the one or more first grooves or projections with the one or more second grooves or projections when the one or more first grooves or projects align with the one or more second grooves or projections.

## Description

### CROSS REFERENCE TO RELATED APPLICATIONS

This application is a Non-Provisional Patent Application claiming priority to U.S. Provisional Patent Application No. 63/671,393 entitled "SPRING-LOADED DOCKING SYSTEMS FOR WELDING TORCH NECKS" filed July 15, 2024, which is herein incorporated by reference in its entirety.

### FIELD OF THE DISCLOSURE

This disclosure relates generally to welding torch necks and, more particularly, to spring-loaded docking systems for welding torch necks.

### BACKGROUND

Conventional welding systems utilize a welding torch in order to perform welding. Typically, welding torches include a torch neck that is manually attached to the welding torch and provides welding power, shielding gas, and welding wire for welding. Manually installing the torch neck can lead to an inconsistent tool center point depending on the user and/or frequency of installation.

### SUMMARY

Welding systems with welding torch necks are disclosed and, more particularly, welding systems with spring-loaded docking systems for welding torches are disclosed, substantially as illustrated by and described in connection with at least one of the figures, as set forth more completely in the claims.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 illustrates an example robotic welding system, in accordance with aspects of this disclosure.
FIG. 2 illustrates a first cross-sectional view of an example docking system that may be used to implement the example welding-type system of FIG. 1, in accordance with aspects of this disclosure.
FIG. 3 illustrates a second cross-sectional view of an example docking system that may be used to implement the example welding-type system of FIG. 1, in accordance with aspects of this disclosure.
FIG. 4 illustrates a third cross-sectional view of an example docking system that may be used to implement the example welding-type system of FIG. 1, in accordance with aspects of this disclosure.
FIG. 5 illustrates a side view of an example neck assembly of an example docking system that may be used to implement the example welding-type system of FIG. 1.
FIG. 6 illustrates a cross-section view of an example neck assembly of an example docking system that may be used to implement the welding-type system of FIG. 1.

The figures are not necessarily to scale. Where appropriate, similar or identical reference numbers are used to refer to similar or identical components.

### DETAILED DESCRIPTION

For the purpose of promoting an understanding of the principles of this disclosure, reference will be now made to the examples illustrated in the drawings and specific language will be used to describe the same. It will nevertheless be understood that no limitation of the scope of the claims is intended by this disclosure. Modifications in the illustrated examples and such further applications of the principles of this disclosure as illustrated therein are contemplated as would typically occur to one skilled in the art to which this disclosure relates.

This disclosure relates generally to welding torch necks and, more particularly, to spring-loaded docking systems for welding torch necks. Example welding-type systems are disclosed that secure welding torch neck to a welding torch in order provide a mechanical and electrical connection through the welding torch. Disclosed example welding systems with spring-loaded docking systems provide consistent installation of the welding torch neck to the welding torch.

Welding torch necks may be removed from welding torches for a variety of reasons. Each time a welding torch neck is installed on the welding torch, the tool center point (TCP) may be changed. Even a small change, such as +/-.0010", in the TCP can impact welding and/or the consistency across welding different parts. Furthermore, a liner and/or consumables of the welding torch may prevent the torch neck from being properly seated once the torch neck is removed.

Additionally, welding torch necks may be installed incorrectly or outside of certain tolerance levels, which can lead to parts being made incorrectly or even a catastrophic failure of the welding torch neck, torch connectors, and/or parts that make up the welding torch. For example, different operators may tighten bolts differently or more tightly, leading to changes in TCP. Moreover, even the same operator may install a welding torch neck differently in current welding systems.

The present disclosure provides a welding-type system with a spring-loaded docking system to secure a welding torch neck. The present disclosure advantageously installs the neck in a predetermined direction, ensures a face-to-face connection between the torch neck and the torch connector, and retains the welding torch neck at a predetermined position relative to the welding torch.

Disclosed example welding-type systems provide bolts with alignment and locating features to retain the welding torch neck in the direction of installation. Disclosed example welding-type systems are configured to provide a consistent method for a user or various users to install a welding torch neck in order to retain the TCP of a welding torch. Disclosed example welding-type systems allow for uniform installation of a welding torch in order to ensure consistent alignment and TCP while being less affected by the amount of torque placed on the bolts to retain the torch neck.

As used herein, the word "exemplary" means "serving as an example, instance, or illustration." The examples described herein are not limiting, but rather are exemplary only. It should be understood that the described examples are not necessarily to be construed as preferred or advantageous over other examples. Moreover, the terms "examples of the invention," "examples," or "invention" do not require that all examples of the invention include the discussed feature, advantage, or mode of operation.

Disclosed example embodiments include a docking system for a welding torch neck. The docking system also includes a neck body configured to receive the welding torch neck and may include one or more bolts and a face; a torch connector may include one or more first grooves or projections and configured to receive the one or more bolts of the neck body and to connect to a welding torch, and a cover may include one or more second grooves or projections and configured to secure the neck body to the torch connector by joining the one or more first grooves or projections with the one or more second grooves or projections when the one or more first grooves or projections align with the one or more second grooves or projections.

In some example embodiments, the one or more bolts of the neck body are flush with the face of the neck body or within the neck body when the cover is secured. In some example embodiments, the one or more first grooves or projections may include one or more snap rings. In some example embodiments, the one or more second grooves or projections may include one or more snap ring grooves. In some example embodiments, the neck body is additionally secured to the torch connector by tightening the one or more bolts a predetermined distance. In some example embodiments, the neck body further may include one or more bolt retainers configured to retain the one or more bolts within the neck body. In some example embodiments, the one or more bolts may include one or more compression springs. In some example embodiments, the docking system may include one or more openings within the torch connector to receive the one or more bolts. In some example embodiments, the one or more openings are threaded, the one or more bolts are threaded, and the one or more openings are configured to receive the one or more bolts.

In some example embodiments, the one or more bolts place a force in a direction of the torch connector as the bolts are tightened within the one or more openings. In some example embodiments, the welding torch neck may include one or more apertures to receive one or more pins of the neck body in order to affix the welding torch neck to the neck body. In some example embodiments, the face of the neck body may include a first face, the torch connector may include a second face, and the first face and the second face are configured to align so that the first face and second face are in contact. In some example embodiments, the neck body may include one or more dowels and the torch connector may include one or more recesses, and the one or more recesses are configured to receive the one or more dowels in order to align the welding torch neck with the torch connector.

Disclosed example embodiments include a welding torch, which includes a welding torch neck including a conductor; a welding torch body; a welding cable; and a welding torch neck docking system configured to attach the welding torch neck to the welding torch body. Disclosed example embodiments of the welding torch neck docking system include a neck body configured to receive the welding torch neck, one or more bolts, and a face. Disclosed example embodiments of the welding torch neck docking system include a torch connector which includes one or more first grooves or projections and is configured to receive the one or more bolts of the neck body and connect to the welding torch, and a cover including one or more second grooves or projections and configured to install the neck body on the torch connector by aligning the one or more first grooves or projections with the one or more second grooves or projections.

In some example embodiments, the welding torch neck docking system is configured to channel wire, shielding gas, and power from the welding cable to the welding torch via the conductor. In some example embodiments, the one or more bolts of the neck body are flush with the face of the neck body or within the neck body when the neck body is installed. In some example embodiments, the one or more first grooves or projections comprise one or more snap rings. In some example embodiments, the one or more second grooves or projections comprise one or more snap ring grooves. In some example embodiments, the one or more first grooves or projections are aligned with the one or more second grooves or projections by tightening the one or more bolts into one or more openings in the torch connector.

As used herein, the terms "first," "second," "third," etc. may be used to enumerate different components or elements of the same type, and do not necessarily imply any particular order.

As used herein, the words "exemplary" and "example" mean "serving as an example, instance, or illustration." The examples described herein are not limiting, but rather are exemplary only. It should be understood that the described examples are not necessarily to be construed as preferred or advantageous over other examples. Moreover, the terms "examples of the invention," "examples," or "invention" do not require that all examples of the invention include the discussed feature, advantage, or mode of operation.

The term "welding-type system," as used herein, includes any device capable of supplying power suitable for welding, plasma cutting, induction heating, Carbon Arc Cutting-Air (e.g., CAC-A), and/or hot wire welding/preheating (including laser welding and laser cladding), including inverters, converters, choppers, resonant power supplies, quasi-resonant power supplies, etc., as well as control circuitry and other ancillary circuitry associated therewith.

As used herein, the term "welding-type power" refers to power suitable for welding, plasma cutting, induction heating, CAC-A and/or hot wire welding/preheating (including laser welding and laser cladding). As used herein, the term "welding-type power supply" and/or "power supply" refers to any device capable of, when power is applied thereto, supplying welding, plasma cutting, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

As used herein, the term "torch," "welding torch," "welding tool" or "welding-type tool" refers to a device configured to be manipulated to perform a welding-related task, and can include a hand-held welding torch, robotic welding torch, gun, gouging tool, cutting tool, or other device used to create the welding arc.

As used herein, the term "welding mode," "welding process," "welding-type process" or "welding operation" refers to the type of process or output used, such as current-controlled (CC), voltage-controlled (CV), pulsed, gas metal arc welding (GMAW), flux-cored arc welding (FCAW), gas tungsten arc welding (GTAW, e.g., TIG), shielded metal arc welding (SMAW), spray, short circuit, CAC-A, gouging process, cutting process, and/or any other type of welding process.

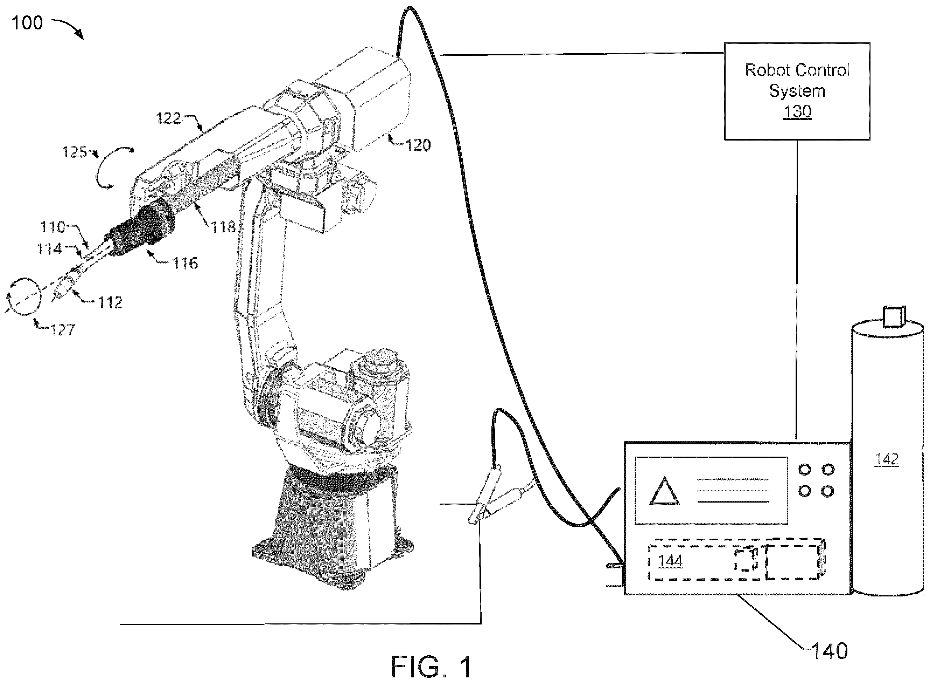

FIG. 1 illustrates an example robotic welding system 100, in accordance with aspects of this disclosure. A welding torch 110 (e.g., a gas metal arc welding (GMAW) torch, a metal inert gas (MIG) torch, etc.) is comprised of a torch body having a nozzle assembly 112 (which may include a contacttip, gas diffuser, gas nozzle, and other components), a welding torch neck 114, and a docking system 116. A welding torch cable 118 connects to the welding torch 110 and/or power supply 140 to deliver wire, gas 142, and electrical power to the welding torch 110. The shielding gas 142, electrical current, and a consumable electrode (e.g., a welding wire) are channeled through the welding torch 110 to output a welding arc at the nozzle assembly 112. A rotating power connector or other type of welding torch cable connector may be arranged within the docking system 112, providing paths for electrical conduction, fluid conduction, and/or wire guidance between the welding torch neck 114 and the welding torch cable 118.

The welding torch cable 118 may include one or more of a core tube (e.g., to conduct gas and/or welding wire), copper cabling (e.g., to conduct welding-type current), and/or shielded lead wires (e.g., to communicate sensor measurements, current, and/or other signaling between the torch and a control device), as a non-limiting list of examples. The welding torch cable 118 may be connected to a wire feeder 120 opposite the welding torch 110. The welding torch neck 114 is inserted into a forward end of the housing 111 and allows for the communication of the consumable electrode, the shielding gas 142, and/or the welding current to the nozzle assembly 112 mounted on the welding torch neck 114. The welding torch 110 is coaxially mounted to a robotic arm 122 such that the welding torch cable 118 is arranged along substantially the center axis of the robotic arm 122. However, the welding torch 110 may be mounted to a robotic arm in a disposition other than a coaxially mounted disposition. In some examples, the robotic arm 122 is configured to rotate the welding torch 110 bidirectionally about a rotational axis 125, as well as rotate bidirectionally about the center axis 127 of the robotic arm 122. For instance, a robotic manipulator 124 is employed to control movement of the welding torch 110 in one or more directions using a joint of the robot.

The wire feeder 120 feeds the welding wire through the welding torch cable 118, docking system 116, welding torch neck 114, and through an opening in a contact tip of the nozzle assembly 116 at the forward end of the welding torch 110. The welding wire, when energized for welding, carries an electrical potential. When the welding wire arcs with metal workpieces, an electrical circuit is completed and current flows through the welding wire, across the arc to metal workpieces and to a ground or other type of current return. The arc causes the welding wire and the metal of the workpieces to melt, thereby joining the workpieces as the melt solidifies.

The example robotic welding system 100 is configured to form a weld using any known electric welding techniques. Example electric welding techniques include shielded metal arc welding (SMAW), MIG, flux-cored arc welding (FCAW), TIG, laser welding, sub-arc welding (SAW), stud welding, and resistance welding. In some examples, the power supply 140 and/or other welding equipment are configured to support one or more, but fewer than all, types of welding processes. To change welding processes, the power supply 140, welding torch 110, and/or other welding equipment may be removed (e.g., disconnected and moved away from the robotic welding system 100) and replaced by a different welding-type power supply, torch, and/or other welding equipment that supports the desired welding process. Additionally or alternatively, multiple different types of welding equipment (e.g., multiple power supplies having different capabilities, multiple torches, etc.) may be co-located (e.g., proximate to the robotic manipulator 124, on a rack of equipment, etc.) to enable rapid reconfiguration of the robotic welding system 100. In some examples, the housing 111 and/or the clutch 112 are compatible with multiple different types of welding torches (e.g., different makes and/or models). In some other examples, the housing 111 and/or the clutch 112 are replaceable with other versions to match a particular type, make, and/or model of welding torch to a particular type, make, and/or model of robotic arm.

The example robotic manipulator 124 and/or the example robot control system 130 are configured to transmit commands, requests, data, and/or other messages and/or communications to the power supply 140 via one or more protocols. The robotic manipulator 124 and/or the robot control system 130 are further configured to receive responses, acknowledgments, data, and/or other messages and/or communications from the power supply 140 via the one or more protocols. Based on a robotic welding procedure, the robotic manipulator 124 and/or the robot control system 130 may communicate parameters to the power supply 140 for configuration according to the robotic welding procedure, and/or adjust the welding-type process based on the variables and/or other data obtained from the power supply 140 while performing welding operations. In addition to communication with the power supply 140, the robotic manipulator 124, and/or the robot control system 130, the power supply 140, the robotic manipulator 124, and/or the robot control system 130 may communicate with other welding equipment (e.g., a welding accessory, such as the wire feeder 120, a shielding gas supply valve, a welding wire preheating system, a fume extraction system) and/or other robotic equipment.

In some examples, the power supply 140 directly supplies input power to the welding torch 110. In the illustrated example, the power supply 140 is configured to supply power to welding operations and/or preheating operations. The example power supply 140 may also provide power to a wire feeder to supply electrode wire to the welding torch 110 for various welding applications (e.g., GMAW welding, flux core arc welding (FCAW)). The power supply 140 includes a controller 144 to control the operation of the power supply 140. The controller 144 may also include interface circuitry for communicating data to other devices in the system, such as the wire feeder 120, the robotic manipulator 124, and/or the robot control system 130. For example, in some situations, power supply 140 wirelessly communicates with other welding devices within the welding system. Further, in some situations, the power supply 140 communicates with other welding devices using a wired connection, such as by using a network interface controller (NIC) to communicate data via a network (e.g., ETHERNET, 10baseT, 10base100, etc.).

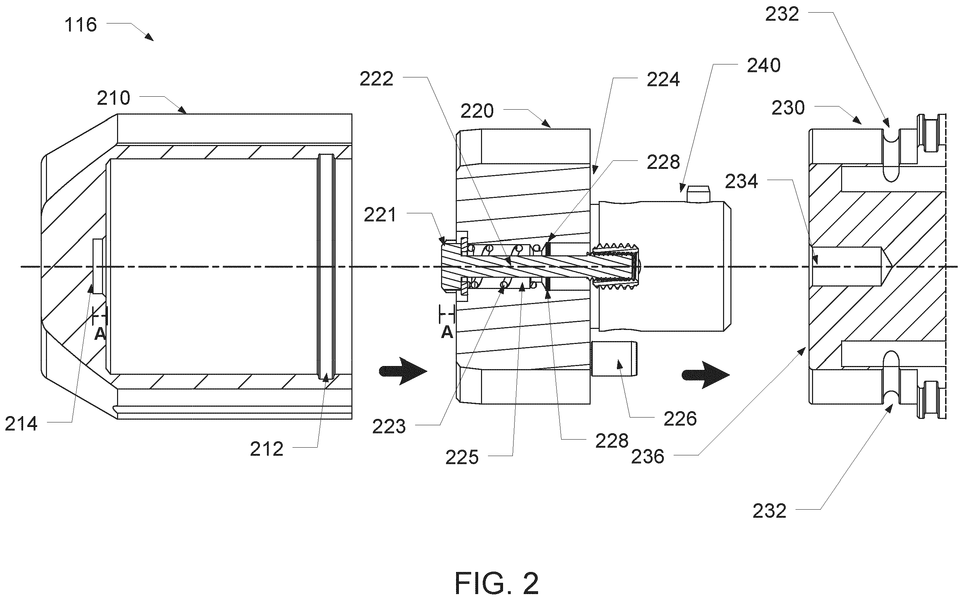

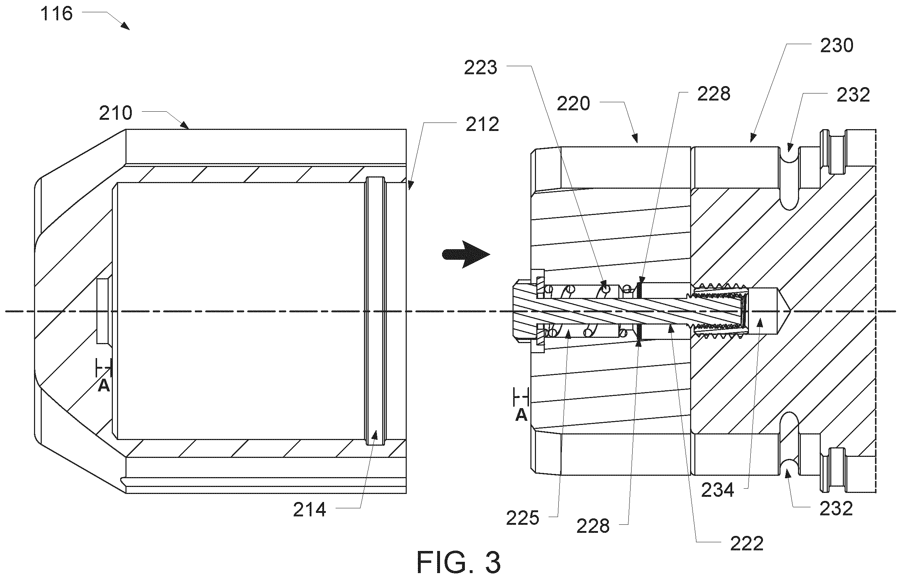

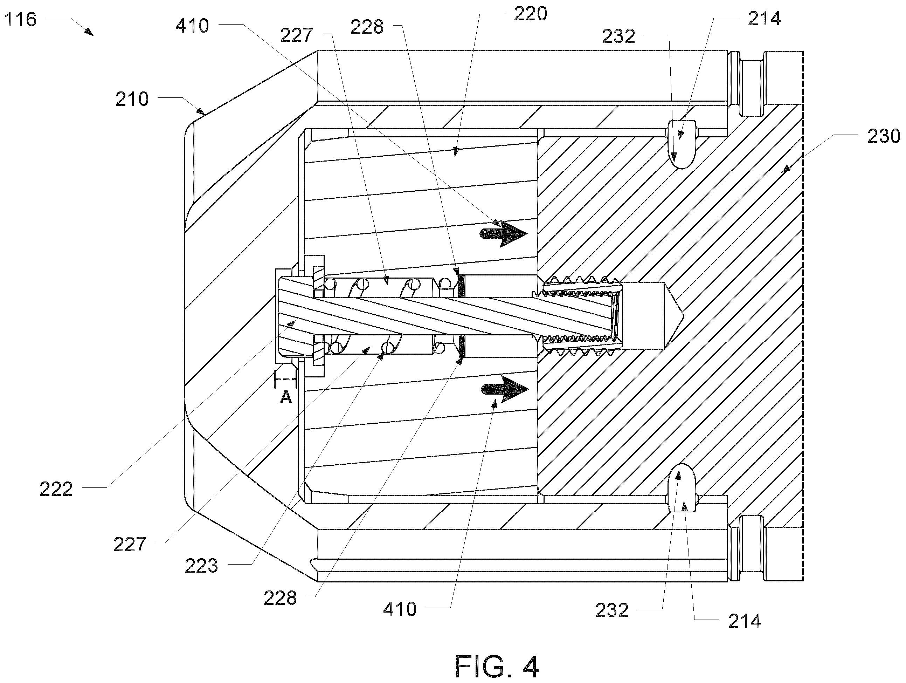

FIG. 2 illustrates a cross-sectional view of an example docking system that may be used to implement the example welding-type system of FIG. 1, in accordance with aspects of this disclosure. FIG. 3 illustrates a second cross-sectional view of an example docking system that may be used to implement the example welding-type system of FIG. 1. FIG. 4 illustrates a third cross-sectional view of an example docking system that may be used to implement the example welding-type system of FIG. 1. The example docking system 116 includes a cover 210, a neck body 220, and a torch connector 230. The cover 210 includes one or more first grooves or projections, such as a snap ring 212 and/or a snap ring groove. In some examples, the one or more grooves or projections may be located on a portion of the cover 210, one or more grooves or projections may be located on a circumference of the cover 210, two grooves or projections may be located opposite each other on the cover 210, as non-limiting examples.

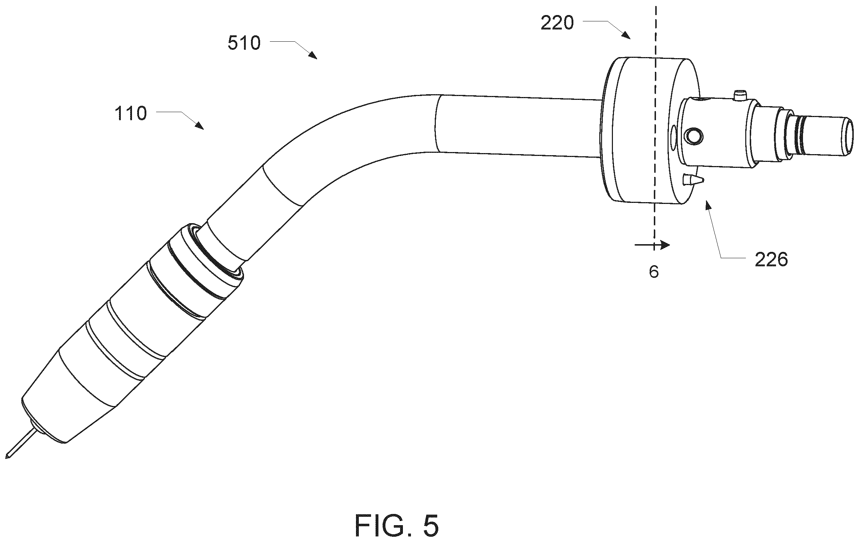

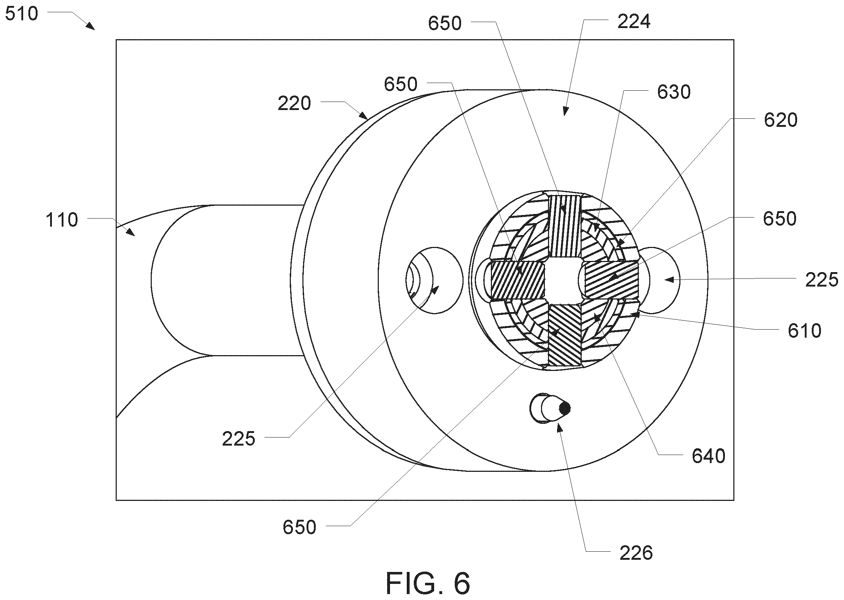

The neck body 220 may include one or more bolts 222, a first face 224, one or more apertures 225, and one or more aligning components. In some examples, the aligning components may be one or more screws, bolts, pins, tongue and groove components, or dowels 226, as non-limiting examples. In some examples, the neck body 220 may also include one or more grooves or projections. The bolts 222 may be bolts, screws, rivets, pins, or other types of fasteners. In some examples, the bolts 222 may include compression springs 223 or other similar springs that provide a force when compressed. The bolts 222 may be located within one or more apertures 225 of the neck body, and extend from the neck body 220 a distance A. FIG. 2 depicts the compression springs 223 in an extended position, while FIG. 3 depicts the compression springs 223 in a compressed position. In some examples, the neck body 220 includes bolt retainers 228 to prevent the bolts 222 from falling out of the neck body 220 when the neck body 220 is not joined to the torch connector 230. A portion 240 of the torch neck 114 is depicted in FIG. 2 prior to joining the neck body 220 to the torch connector 230. The neck body 220 may be integrated with the torch neck 114 as described below with regards to FIGs. 5 and 6.

The torch connector 230 may include one or more second grooves or projections, which may match the one or more grooves or projections of the cover 210. For example, if the cover 210 includes a projection, the torch connector 230 may include one or more grooves to receive the projection from the cover 210. For example, the torch connector 230 may include a snap ring and/or a snap ring groove 232, which may fit the snap ring 212 of the cover 210. In some examples, the torch connector 230 and the cover 210 may include multiple snap rings 212 and multiple snap grooves. In some examples, the cover 210 may include a snap ring and the torch connector may include a snap groove. In some examples, the cover 210 and/or the torch connector may include both projection(s) and groove(s). In some examples, the neck body 220 may include projections and/or grooves to engage the cover 210.

The torch connector 230 may include one or more dowel recesses (not shown) and openings 234. The one or more dowel recesses may be located on the second face 236 of the torch connector 230 and may receive the dowel(s) 226 from the neck body in order to align the neck body 220 with the torch connector 230. In some examples, the one or more openings 234 are threaded openings. The openings 234 are configured to receive the bolts 222 of the neck body 220. The cover 210 may be a removable cover that is fitted over the neck body 220 when the neck body 220 is joined to the torch connector 230. In some examples, the cover 210 includes a recess 214 to receive an extended portion 221 of the bolts 222 of dimension A. In some other examples, the neck body 220 includes a recess for the portion of the bolts 222 so that the bolts are flush with the neck body 220, in which case the cover 210 may or may not include the recess 214.

Referring to FIGs. 3 and 4, the neck body 220 may be joined to the torch connector 230 by aligning the neck body 220 to the torch connector 230. In some examples, the dowel 226 of the neck body 220 may be used to align the neck body 220 with the torch connector 230. Once aligned, the bolts 222 of the neck body 220 may be fit into the openings 234 of the torch connector 230. In some examples, the bolts 222 are fitted into the openings 234 by threading the bolts 222 into the openings 234. As the neck body 220 is joined to the torch connector 230, the compression springs 223 move from an extended position to a compressed position. The neck body 220 places a force 410 in the direction of the torch connector 230 which results in the neck body 220 being driven into the torch connector 230, thus ensuring proper alignment and consistent TCP while being less affected by the amount of torque placed on the bolts. Greater tightening of the bolts 222 leads to a greater force between the neck body 220 and the torch connector 230. When properly aligned and joined, a face 224 of the neck body 220 and a face 236 of the torch connector 230 will also align so that the face 224 of the neck body 220 and the face of the torch connector 236 are in contact without any gaps between the face 224 and the face 236.

After the neck body 220 is joined to the torch connector 230, the cover 210 may be placed over the neck body 220 and torch connector 230. If the bolts 222 were tightened sufficiently into the openings 234, the cover 210 will fit over the neck body 220, and the torch connector 230 and the snap ring 212 of the cover 210 will fit into the snap groove 232 of the torch connector 230 as depicted in FIG. 4. If the bolts 222 were not properly placed (e.g., not sufficiently tightened and/or the bolts 222 extend a distance A or smaller distance from the neck body 220), the snap ring 212 of the cover 210 may not fit as desired within the snap groove 232 of the torch connector 230, and/or the cover 210 will not be able to engage properly with the torch connector 230. In some examples, the cover 210 may include one or more snap grooves and/or rings and the torch connector 230 may include one or more snap grooves and/or rings or vice versa. Additionally or alternatively, the neck body 220 may include one or more snap grooves and/or rings which may be used to engage one or more snap grooves or rings of the cover 210.

In some examples, to remove the cover 210, the cover 210 may be slid back/away from the torch connector, thereby collapsing and disengaging the snap ring 212 from the snap groove 232. Once the cover 210 is removed, the bolts 222 are exposed and may be loosened in order to remove the neck body 220 along with the torch neck from the torch connector 230, which is described in FIGs. 5 and 6 below.

FIG. 5 illustrates a side view of an example neck assembly 500 of an example docking system 116 that may be used to implement the example welding-type system of FIG. 1. FIG. 6 illustrates a cross-section view of an example neck assembly 500 of an example docking system 116 that may be used to implement the welding-type system of FIG. 1. The example neck assembly 500 includes a torch neck 114 and a neck body 220. The neck body 220 may be integrally joined with the torch neck 110. In some examples, the torch neck 114 may be formed of an armor layer 610, a first insulating layer 620, a second insulating layer 630, and a conductor 640. The armor layer 610, first insulating layer 620, second insulating layer 630, and conductor 640 may be joined together using one or more pins. In some examples, the armor layer 610, first insulating layer 620, second insulating layer 630, and conductor 640 are joined together using four pins. The face 224 of the neck body 224 may function as a locating feature for properly attaching the neck assembly 500 to the torch connector 230 to maintain a TCP as described above with regards to FIGs. 2-4.

As utilized herein, "and/or" means any one or more of the items in the list joined by "and/or." As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y, and/or z" means "one or more of x, y and z". As utilized herein, the term "exemplary" means serving as a non-limiting example, instance, or illustration. As utilized herein, the terms "e.g." and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by an operator-configurable setting, factory trim, etc.).

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, block and/or components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.

## Claims

1. A docking system for a welding torch neck comprising:
a neck body configured to receive the welding torch neck and comprising one or more bolts and a face;
a torch connector comprising one or more first grooves or projections and configured to receive the one or more bolts of the neck body and to connect to a welding torch; and
a cover comprising one or more second grooves or projections and configured to ensure the neck body is fastened to the torch connector by joining the one or more first grooves or projections with the one or more second grooves or projections when the one or more first grooves or projections align with the one or more second grooves or projections.

2. The docking system of claim 1, wherein the one or more bolts of the neck body are flush with the face of the neck body or within the neck body when the cover is secured.

3. The docking system of claim 1, wherein the one or more first grooves or projections comprise one or more snap rings.

4. The docking system of claim 3, wherein the one or more second grooves or projections comprise one or more snap ring grooves.

5. The docking system of claim 1, wherein the neck body is additionally secured to the torch connector by tightening the one or more bolts a predetermined distance.

6. The docking system of claim 1, wherein the neck body further comprises one or more bolt retainers configured to retain the one or more bolts within the neck body.

7. The docking system of claim 1, wherein the one or more bolts comprise one or more compression springs.

8. The docking system of claim 1, further comprising one or more openings within the torch connector to receive the one or more bolts.

9. The docking system of claim 8, wherein the one or more openings are threaded, the one or more bolts are threaded, and the one or more openings are configured to receive the one or more bolts.

10. The docking system of claim 9, wherein the one or more bolts place a force in a direction of the torch connector as the bolts are tightened within the one or more openings.

11. The docking system of claim 1, wherein the welding torch neck comprises one or more apertures to receive one or more pins of the neck body in order to affix the welding torch neck to the neck body.

12. The docking system of claim 1, wherein the face of the neck body comprises a first face, the torch connector comprises a second face, and the first face and the second face are configured to align so that the first face and second face are in contact.

13. The docking system of claim 1, wherein the neck body comprises one or more dowels and the torch connector comprises one or more recesses, and the one or more recesses are configured to receive the one or more dowels in order to align the welding torch neck with the torch connector.

14. A welding torch comprising:
a welding torch neck comprising a conductor;
a welding torch body;
a welding cable; and
a welding torch neck docking system configured to attach the welding torch neck to the welding torch body and comprising:
a neck body configured to receive the welding torch neck and comprising one or more bolts and a face;
a torch connector comprising one or more first grooves or projections and configured to receive the one or more bolts of the neck body and connect to the welding torch; and
a cover comprising one or more second grooves or projections and configured to confirm installation of the neck body on the torch connector by aligning the one or more first grooves or projections with the one or more second grooves or projections.

15. The welding torch of claim 14, wherein the welding torch neck docking system is configured to channel wire, shielding gas, and power from the welding cable to the welding torch via the conductor.
